# EUROPÄISCHE PATENTSCHRIFT

(11) **EP 1 983 139 B1**
(45) Veröffentlichungstag und Bekanntmachung des Hinweises auf die Patenterteilung: **04.05.2016**
(21) Anmeldenummer: 08102608.0
(22) Anmeldetag: 14.03.2008
(51) Int. Cl.: E06B 3/667

(54) **U-förmiger Steckverbinder**
U-shaped connector
Connecteur en forme de U

(30) Priorität: 20.04.2007 DE 202007005834 U
(43) Veröffentlichungstag der Anmeldung: 22.10.2008
(73) Patentinhaber: CERA GmbH, 87674 Ruderatshofen (DE)
(72) Erfinder: Rafeld-Cech, Karin, D-87499, Wildpoldsried (DE)
(74) Vertreter: Hutzelmann, Gerhard

(56) Entgegenhaltungen:
- EP-A2- 0 750 090
- EP-A2- 1 076 150
- DE-A1- 19 811 979
- DE-U1- 29 921 229
- DE-U1-202004 004 933

## Beschreibung

Die Erfindung betrifft einen U-förmigen Steckverbinder aus Kunststoff zum Verbinden von Hohlprofilen, insbesondere von Abstandhalter-Hohlprofilen aus Metall, Kunststoff od. dgl. für insbesondere Mehrscheibenisoliergläser.

Es sind bereits derartige Steckverbinder bekannt, bei denen der Steckverbinder an seinen Seitenstegen mit nach außen gerichteten, entgegen der Einsteckrichtung nach hinten geneigten Lamellen versehen ist und bei denen der Steckverbinder im Bereich seiner Bodenfläche und im Bereich seiner Seitenstege derart ausgebildet ist, daß er sich wenigstens annähernd formschlüssig in ein Hohlprofil einsetzen lässt.

Diese Steckverbinder halten zwar gut in den Hohlprofilen. Es hat sich jedoch gezeigt, daß diese bei ungünstigen Toleranzpaarungen nur schwer eingesteckt werden können. Dies funktioniert beim Einstecken von Hand oder auch bei einer halbautomatischen Verarbeitung immer noch.

Jedoch wird es immer wichtiger, daß sich die Steckverbinder auch vollautomatisch verarbeiten lassen. Bei heutigen Verarbeitungsanlagen werden nicht nur die Steckverbinder automatisch verarbeitet, sondern die gesamte Isolierglasherstellung läuft automatisch ab. Erst am Ende erfolgt eine Endkontrolle.

Gerade dabei ist es wichtig, daß sich die Steckverbinder vollautomatisch maschinell verarbeiten lassen und ein vollständiges Einstecken gewährleistet ist. Bei der vollautomatischen Verarbeitung treten besonders beim Biegen der Hohlprofile oft größere Scherkräfte auf, die der Steckverbinder aufnehmen muss. Es muss deswegen auch ein versehentliches Abbrechen oder Heraussrutschen des Steckverbinders bei solchen größeren Belastungen vermieden werden. Nur so kann sichergestellt werden, daß in den Hohlprofilen eingebrachtes Trockungsmittel nicht zwischen die Glasscheiben der Isolierglasscheibe gelangen kann.

Der Erfindung liegt die Aufgabe zugrunde, einen Steckverbinder vorzuschlagen, der vollautomatisch verarbeitbar ist und die vorgenannten Punkte erfüllt.

Diese Aufgabe wird erfindungsgemäß dadurch gelöst, daß der Steckverbinder in seinem mittleren Bereich eine Verstärkung aufweist, und daß eine Taillierung des Steckverbinders vorgesehen ist, die durch eine partielle Reduzierung der Höhe der Seitenstege gebildet ist.

Durch die Verstärkung wird der Steckverbinder stabilisiert und kann einerseits maschinell schneller in die Hohlprofile eingesteckt werden und andererseits wird die Scherstabilität verbessert.

Dabei hat es sich als sehr vorteilhaft erwiesen, wenn die Verstärkung an den Innenseiten der Seitenstege angebracht ist.

Hierdurch wird weder die Passform des Steckverbinders in den Hohlprofilen noch der Trockungsmutteldurchlauf durch den Steckverbinder verschlechtert. Trotzdem wird eine signifikante Erhöhung der Stabilität erzielt.

Erfindungsgemäß hat es sich als sehr vorteilhaft erwiesen, wenn die Verstärkung als Materialverdickung ausgebildet ist.

Eine Materialverdickung sorgt auf einfache Art und Weise für eine Erhöhung der Stabilität.

Dabei hat es sich als sehr vorteilhaft erwiesen, wenn die Materialverdickung ballig ausgebildet ist.

Durch die ballige Ausbildung wird nur dort zusätzliches Material vorgesehen, wo dieses auch tatsächlich zur Versteifung bzw. Erhöhung der Stabilität benötigt wird.

Durch diese Taillierung werden Toleranzen der Hohlprofile ausgeglichen und so ein vollständiges Zusammenschieben ermöglicht. Zudem können diese so ausgestaltenen Steckverbinder auch in geringfügig abweichende Hohlprofile eingesteckt werden.

Es hat sich erfindungsgemäß auch als sehr vorteilhaft erwiesen, wenn die Taillierung im Bereich der Steckverbindermitte vorgesehen ist.

Genau an diesen Stellen besteht das Problem, daß sich die Hohlprofile beim Aufschieben auf den Steckverbinder verhaken und verklemmen können. Durch die Taillierung an dieser Stelle wird das vermieden.

Damit wird eine Selbstanpassung des Steckverbinders an verschiedene Hohlprofile ermöglicht. Für den Fall, daß ein Span an den Seitenstegen abgetragen werden sollte, wird dieser im Bereich der Taillierung nach innen geleitet und so ein Verklemmen vermieden.

Sehr vorteilhaft ist es erfindungsgemäß auch, wenn die Taillierung über ihre Erstreckung eine unterschiedliche Ausprägung und/oder Tiefe aufweist.

Hierdurch wird im aufgeschobenen Zustand der Hohlprofile eine Sicherung gegen ein versehentliches Abrutschen der Hohlprofile realisiert.

Sehr vorteilhaft ist es erfindungsgemäß auch, wenn die Taillierung in ihrem inneren Bereich eine geringere Tiefe aufweist als an ihren äußeren Bereichen.

Damit wird einerseits gewährleistet, daß die Hohlprofile vollständig aneinander angeschoben werden können und andererseits werden die Hohlprofile auf dem Steckverbinder aufgespannt und fixiert. Zudem wird hierdurch eine optimale Spanableitung in den Innenraum des Verbinders sichergestellt.

Als sehr vorteilhaft hat es sich auch erwiesen, wenn die Taillierung ballig ausgebildet ist.

Hierdurch wird das Verklemmen des Steckverbinders im Hohlprofil nochmals verstärkt. Zudem wird der Steckverbinder nochmals gegen Scherkräfte widerstandsfähiger.

Eine weitere sehr vorteilhafte Ausgestaltung der Erfindung liegt auch dann vor, wenn sich die Taillierung und/oder die Verstärkung über ein Drittel bis zur Hälfte der Länge des Steckverbinders erstreckt.

Damit wurden beste Ergebnisse bei der Lösung der erfindungsgemäßen Aufgabe erzielt.

Es hat sich gemäß einer Weiterbildung der Erfindung auch als sehr vorteilhaft erwiesen, wenn die Anschläge an den Außenseiten der Seitenstege vorgesehen sind.

Durch diese Anschläge wird ein versehentliches zu tiefes Einstecken der Steckverbinder in die Hohlprofile vermieden.

Sehr vorteilhaft ist es auch, wenn die Bodenfläche wenigstens eine Durchbrechung aufweist.

Hiermit wird Material eingespart ohne die Stabilität des Steckverbinders negativ zu beeinflussen.

Eine weitere sehr vorteilhafte Ausgestaltung der Erfindung liegt auch dann vor, wenn die Seitenstege wenigstens im oberen Bereich der Kontur des zu verbindenden Hohlprofils angepasst ausgebildet sind.

Dadurch wird ein sehr guter Sitz des Verbinders im Hohlprofil gewährleistet.

Erfindungsgemäß hat es sich auch als sehr vorteilhaft erwiesen, wenn die Seitenstege im oberen Bereich an der Außenseite nach innen abgeschrägt ausgebildet sind.

Durch die Abschrägung kann der Verbinder nochmals leichter in die Hohlprofile eingesetzt werden.

Im folgenden wird die Erfindung anhand eines Ausführungsbeispiels veranschaulicht. Dabei zeigen:
- Fig. 1: eine Ansicht der Oberseite eines erfindungsgemäßen Verbinders,
- Fig. 2: eine Ansicht der Unterseite desselben Verbinders,

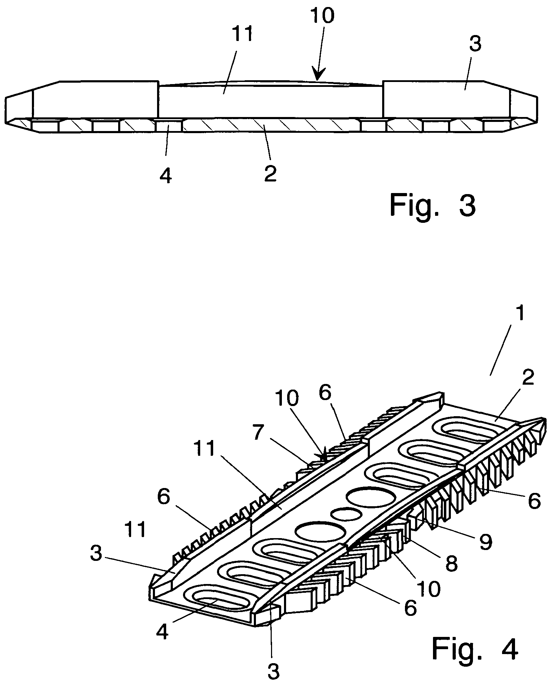

- Fig. 3: einen Längsschnitt durch denselben Verbinder,
- Fig. 4: ein Schaubild des Verbinders,

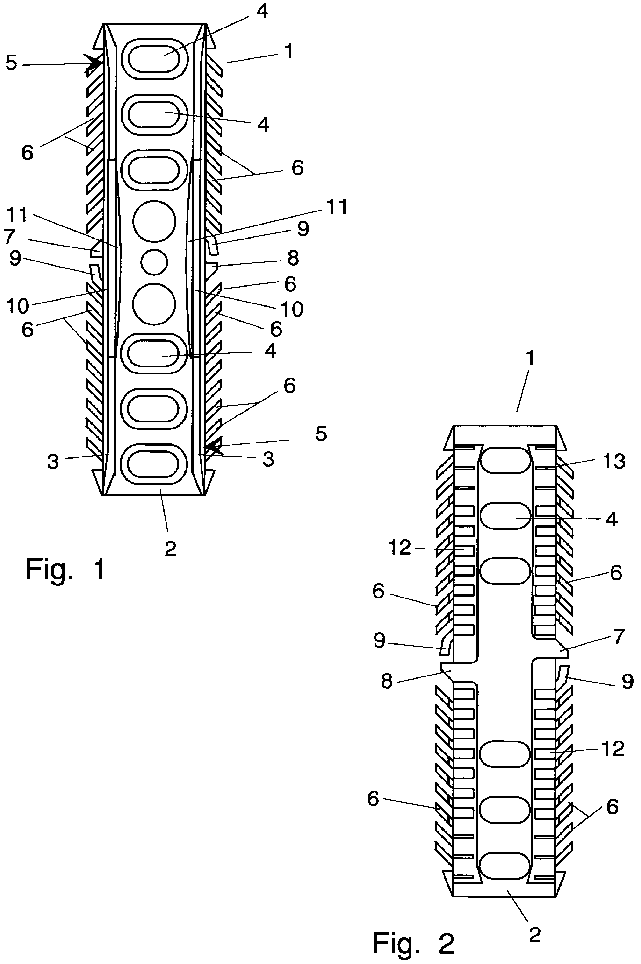

Mit 1 ist in Fig. 1 ein U-förmiger Steckverbinder zum Einstecken in Abstandhalterhohlprofile zum Beispiel aus dem Fensterbau bezeichnet, der aus einer Bodenfläche 2 und zwei daran an den Längsseitenkanten angelenkten Seitenstegen 3 aufgebaut ist. Die Bodenfläche 2 ist mit Ausnehmungen 4 ausgerüstet, welche die Bodenfläche durchbrechen. Der Verbinder 1 weist in Querrichtung ein U-förmiges Profil auf. Die Bodenfläche 2 und die Seitenstege 3 bilden zusammen das U-förmige Profil des Steckverbinders 1. An den Außenseiten 5 der Seitenstege 3 sind entgegen der Einsteckrichtung des Steckverbinders 1 nach hinten geneigte, federnd ausgebildete Lamellen 6 vorgesehen, welche sich in den nicht dargestellten Hohlprofilen zu verhaken vermögen und durch ihre federnde Ausgestaltung Toleranzen in den Abmessungen der Hohlprofile auszugleichen vermögen.

In der Mitte der Längserstreckung der Seitenstege 3 ist auf deren Außenseite 5 jeweils ein Mittenanschlag 7 und 8 vorgesehen, wobei der Mittenanschlag 7 für das erste Hohlprofil und der Mittenanschlag 8 für das zweite Hohlprofil vorgesehen ist. In Einsteckrichtung vor den Mittenanschlägen 7 und 8 ist jeweils ein Ausgleichselement 9 vorgesehen, welches federnd ausgebildet ist und einerseits ein Wackeln des Verbinders 1 in den Hohlprofilen verhindert und andererseits Breitentoleranzen der Hohlprofile auszugleichen vermag.

An der Außenseite der Bodenfläche 2 können entlang den Längskanten eine Vielzahl von Erhebungen 12 vorgesehen sein. Diese Erhebungen 12 stützen sich an der Breitseite der Hohlprofile ab. Die Erhebungen 12 können jeweils auf der in Einsteckrichtung des Verbinders 1 vorne liegenden Seite abgeflacht und als Auflaufschräge ausgebildet sein. Die in Einsteckrichtung hinten liegende Seite der Erhebungen 12 ist dagegen senkrecht zur Bodenfläche 2 hin abfallend ausgebildet, wodurch ein leichtes Einstecken ermöglicht wird, aber dennoch eine gute Verhakung der Erhebungen an bereits kleinsten Unebenheiten der Innenseite der Hohlprofil ermöglicht wird.

Es können neben den Erhebungen 12 auch noch lamellenförmige Stege 13 vorgesehen sein, die sich ebenfalls auf der Innenseite der Hohlprofile abzustützen vermögen. Diese Stege 13 können plastisch und elastisch verformbar oder aber federnd ausgebildet sein.

In der Mitte der Längserstreckung der Seitenstege 3 ist an deren Innenseiten eine Materialverdickung vorgesehen. Diese Materialverdickung 11 bewirkt schon bei einer Materialdicke von wenigen µm eine Steigerung der Stabilität und Verringerung der Bruchneigung von etwa 30%.

Ebenfalls in der Mitte der Längserstreckung der Seitenstege 3 ist an deren von der Bodenfläche 2 abgewandten Kante eine Taillierung 10 vorgesehen. Die Taillierung 10 vermindert dabei die Höhe der Seitenstege 3.

Durch diese Taillierung 10 wird in gewissen, konstruktiv bedingten Grenzen eine Selbstanpassung des Steckverbinders 1 an verschiedene, voneinander abweichende Hohlprofile ermöglicht. Ein etwaiger Spanabtrag an den Seitenstegen 3 wird im Bereich der Taillierung 10 nach innen in den Verbinder 1 geleitet, so daß die beiden auf den Steckverbinder 1 aufgeschobenen Hohlprofile dennoch eng aneinander liegen und sich auch auf Dauer nicht wieder voneinander wegbewegen können.

Es sind verschiedene Ausgestaltungen der Taillierung 10 denkbar. Die Taillierung kann als einfacher Rückversatz der Kante der Seitenstege 3 ausgebildet sein. Es hat sich jedoch als besonders vorteilhaft herausgestellt, wenn die Taillierung 10 ballig ausgeführt ist. Bei einer balligen Taillierung 10, wie sie auch in den Zeichnungen dargestellt ist, ist die Tiefe der Taillierung 10 in den Endbereichen stärker ausgebildet als in der Mitte.

Es ist zusätzlich denkbar, daß sich die Taillierung 10 nicht nur auf die Kanten der Seitenstege 3 beschränkt, sondern sich auch auf die Außenseiten 5 erstreckt oder sogar im Bereich der Bodenfläche 2 vorgesehen ist.

Die Taillierung 10 erstreckt sich ebenso wie die Materialverdickung 11 vorzugsweise über etwa ein Drittel der Gesamtlänge des Steckverbinders 1. Andere Längen sind jedoch denkbar und können auf das jeweils verwendete Hohlprofil oder Gruppen von Hohlprofilen abgestimmt werden.

Das durch die Taillierung 10 eingesparte Material kann der bei der Materialverdickung 11 eingesetzten Materialmenge entsprechen.

Durch die Erhöhung der Stabilität des Steckverbinders 1 und der Ermöglichung einer Selbstanpassung an verschiedene Profile wird die Handhabung der Steckverbinder 1 erheblich vereinfacht. Gerade bei der vollautomatischen Verarbeitung können die Steckverbinder 1 mit höherem Druck und damit auch schneller in die Hohlprofile eingesteckt werden, ohne daß der Trockungsmitteldurchlauf durch die Steckverbinder 1 beeinträchtigt werden würde. Zudem sind die Steckverbinder 1 in der Lage, die bei der vollautomatischen Isolierscheibenherstellung auftretenden höheren Scherkräfte an den Zusammensetzstellen der Hohlprofile aufzunehmen, so daß Ausschuß reduziert wird. Eine manuelle Zwischenkontrolle der Hohlprofile nach dem Biegen kann entfallen. Hierdurch können durch den erfindungsgemäßen Steckverbinder erhebliche Kosten bei der Isolierglasherstellung durch Rationalisierung eingespart werden.

## Patentansprüche

1. U-förmiger Steckverbinder(1) aus Kunststoff zum Verbinden von Hohlprofilen, insbesondere von Abstandhalter-Hohlprofilen aus Metall, Kunststoff od. dgl. für insbesondere Mehrscheibenisoliergläser, wobei der Steckverbinder(1) an seinen Seitenstegen(3) mit nach außen gerichteten, entgegen der Einsteckrichtung nach hinten geneigten Lamellen(6) versehen ist, wobei der Steckverbinder(1) im Bereich seiner Bodenfläche(2) und im Bereich seiner Seitenstege(3) derart ausgebildet ist, daß er sich wenigstens annähernd formschlüssig in ein Hohlprofil einsetzen lässt, wobei der Steckverbinder(1) in seinem mittleren Bereich eine Verstärkung(11) aufweist **dadurch gekennzeichnet, daß** daß eine Taillierung(10) des Steckverbinders(1) vorgesehen ist, die durch eine partielle Reduzierung der Höhe der Seitenstege(3) gebildet ist.

2. Steckverbinder nach Anspruch 1, **dadurch gekennzeichnet, daß** die Verstärkung(11) an den Innenseiten der Seitenstege(3) angebracht ist.

3. Steckverbinder nach Anspruch 1 oder 2, **dadurch gekennzeichnet, daß** die Verstärkung(11) als Materialverdickung ausgebildet ist.

4. Steckverbinder nach einem der vorangehenden Ansprüche, **dadurch gekennzeichnet, daß** die Materialverdickung( 1) ballig ausgebildet ist.

5. Steckverbinder nach einem der vorangehenden Ansprüche, **dadurch gekennzeichnet daß** die Taillierung(10) im Bereich der Steckverbindermitte vorgesehen ist.

6. Steckverbinder nach einem der vorangehenden Ansprüche, **dadurch gekennzeichnet, daß** die Taillierung(10) über ihre Erstreckung eine unterschiedliche Ausprägung und/oder Tiefe aufweist.

7. Steckverbinder nach Anspruch 6, **dadurch gekennzeichnet, daß** die Taillierung(10) in ihrem inneren Bereich eine geringere Tiefe aufweist als an ihren äußeren Bereichen.

8. Steckverbinder nach Anspruch 6 oder 7, **dadurch gekennzeichnet, daß** die Taillierung(10) ballig ausgebildet ist.

9. Steckverbinder nach einem der vorangehenden Ansprüche, **dadurch gekennzeichnet, daß** sich die Taillierung(10) und/oder die Verstärkung(11) über ein Drittel bis zur Hälfte der Länge des Steckverbinders(1) erstreckt.

10. Steckverbinder nach einem der vorangehenden Ansprüche, **dadurch gekennzeichnet, daß** Anschläge(8) an den Außenseiten(5) der Seitenstege(3) vorgesehen sind.

11. Steckverbinder nach einem der vorangehenden Ansprüche, **dadurch gekennzeichnet, daß** die Bodenfläche(2) wenigstens eine Durchbrechung(4) aufweist.

12. Steckverbinder nach einem der vorangehenden Ansprüche, **dadurch gekennzeichnet, daß** die Seitenstege(3) wenigstens im oberen Bereich der Kontur des zu verbindenden Hohlprofils angepasst ausgebildet sind.

13. Steckverbinder nach einem der vorangehenden Ansprüche, **dadurch gekennzeichnet, daß** die Seitenstege(3) im oberen Bereich an der Außenseite(5) nach innen abgeschrägt ausgebildet sind.

## Claims

1. U-shaped plug connector (1) of plastics material for connecting hollow sections, particularly spacer hollow sections of metal, plastics material or the like, for insulating glass units, wherein the plug connector (1) is provided at lateral webs (3) thereof with outwardly directed blades (6) inclined rearwardly against the direction of insertion, wherein the plug connector (1) is so constructed in the region of a base surface (2) thereof and in the region of the lateral webs (3) thereof that it can be inserted into a hollow section with at least approximate interlocking effect, wherein the plug connector (1) has a reinforcement (11) in its centre region, **characterised in that** a waisting (10), which is formed by a partial reduction of the height of the lateral webs (3), of the plug connector (1) is provided.

2. Plug connector according to claim 1, **characterised in that** the reinforcement (11) is formed at the inner sides of the lateral webs (3).

3. Plug connector according to claim 1 or 2, **characterised in that** the reinforcement (11) is formed as a material thickening.

4. Plug connector according to any one of the preceding claims, **characterised in that** the material thickening (11) is formed to be crowned.

5. Plug connector according to any one of the preceding claims, **characterised in that** the wasting (10) is provided in the region of the plug connector centre.

6. Plug connector according to any one of the preceding claims, **characterised in that** the waisting (10) has a different protrusion and/or depth over its length.

7. Plug connector according to claim 6, **characterised in that** the waisting (10) has a smaller depth in its inner region than at its outer regions.

8. Plug connector according to claim 6 or 7, **characterised in that** the waisting (10) is formed to be crowned.

9. Plug connector according to any one of the preceding claims, **characterised in that** the waisting (10) and/or the reinforcement (11) extends or extend over a third to a half of

10. Plug connector according to any one of the preceding claims, **characterised in that** abutments (8) are provided at the outer sides (5) of the lateral webs (3).

11. Plug connector according to any one of the preceding claims, **characterised in that** the base surface (2) has at least one passage (4).

12. Plug connector according to any one of the preceding claims, **characterised in that** the lateral webs (3) are formed at least in the upper region to be adapted to the contour of the hollow section to be connected.

13. Plug connector according to any one of the preceding claims, **characterised in that** the lateral webs (3) are formed in the upper region at the outer side (5) to be chamfered inwardly.

## Revendications

1. Connecteur (1) en forme de U en matière plastique pour la liaison de profilés creux, en particulier de profilés creux d'espacement en métal, matière plastique ou analogue, en particulier pour vitrages isolants multicouches, le connecteur (1) étant pourvu sur ses branches latérales (3) de lamelles (6) dirigées vers l'extérieur, inclinées vers l'arrière à l'encontre de la direction d'enfichage, le connecteur (1) étant réalisé dans la zone de sa surface de base (2) et dans la zone de ses branches latérales (3) de façon à pouvoir être inséré dans un profilé creux au moins approximativement par complémentarité de forme, le connecteur (1) présentant un renfort (11) dans sa zone centrale, **caractérisé en ce qu'**un taillage (10) du connecteur (1) est prévu, qui est formé par une réduction partielle de la hauteur des branches latérales (3).

2. Connecteur selon la revendication 1, **caractérisé en ce que** le renfort (11) est appliqué sur les côtés intérieurs des branches latérales (3).

3. Connecteur selon la revendication 1 ou la revendication 2, **caractérisé en ce que** le renfort (11) est réalisé sous la forme d'un épaississement de matière.

4. Connecteur selon l'une des revendications précédentes, **caractérisé en ce que** l'épaississement de matière (11) est de forme bombée.

5. Connecteur selon l'une des revendications précédentes, **caractérisé en ce que** le taillage (10) est prévu dans la zone centrale du connecteur.

6. Connecteur selon l'une des revendications précédente, **caractérisé en ce que** le taillage (10) présente une accentuation et/ou profondeur différente sur son extension.

7. Connecteur selon la revendication 6, **caractérisé en ce que** le taillage (10) présente une profondeur plus faible dans sa zone intérieure que sur ses zones extérieures.

8. Connecteur selon la revendication 6 ou la revendication 7, **caractérisé en ce que** le taillage (10) est de forme bombée.

9. Connecteur selon l'une des revendications précédentes, **caractérisé en ce que** le taillage (10) et/ou le renfort (11) s'étendent sur un tiers à la moitié de la longueur du connecteur (1).

10. Connecteur selon l'une des revendications précédentes, **caractérisé en ce que** des butées (8) sont prévues sur les côtés extérieurs (5) des branches latérales (3).

11. Connecteur selon l'une des revendications précédentes, **caractérisé en ce que** la surface de base (2) présente au moins un percement (4).

12. Connecteur selon l'une des revendications précédentes, **caractérisé en ce que** les branches latérales (3) sont adaptées, au moins dans la zone supérieure, au contour du profilé creux à relier.

13. Connecteur selon l'une des revendications précédentes, **caractérisé en ce que** les branches latérales (3) sont chanfreinés vers l'intérieur dans la zone supérieure sur le côté extérieur (5).
